# EUROPEAN PATENT SPECIFICATION

(11) **EP 1 531 446 B1**
(45) Date of publication and mention of the grant of the patent: **09.05.2007**
(21) Application number: 04105174.9
(22) Date of filing: 20.10.2004
(51) Int. Cl.: G08G 5/00, G01S 7/00, G01S 5/02

(54) **Distributed single integrated picture method, platform and network**
Methode zur Erzeugung eines verteilten integrierten Einzelbildes, Plattform und Netzwerk dazu
Méthode, plate-forme et réseau d'image intégrée unique

(30) Priority: 11.11.2003 NL 1024757
(43) Date of publication of application: 18.05.2005
(73) Proprietor: THALES NEDERLAND B.V., 7550 GD Hengelo (NL)
(72) Inventor: De Waard, Huub Thalès Intell. Property, 94117 Arcueil (FR)
(74) Representative: Lucas, Laurent Jacques

(56) References cited:
- US-A- 5 696 503
- US-B1- 6 338 011
- US-B1- 6 445 344
- LIGGINS M E ET AL: "DISTRIBUTED FUSION ARCHITECTURES AND ALGORITHMS FOR TARGET TRACKING" PROCEEDINGS OF THE IEEE, IEEE. NEW YORK, US, vol. 85, no. 1, 1997, pages 95-107, XP000686454 ISSN: 0018-9219

## Description

This invention relates to distributed single integrated picture method, platform and network for tracking moving objects. More particularly, this invention is adapted to create and maintain a Single Integrated Air Picture (SIAP) by each platform in the distributed network.

A network of distributed platforms is assumed to be available, each equipped with a processing node and a number of collocated or non collocated sensors. Each of the platforms can receive information from the different other platforms. The objective of each platform in the distributed system is to reconstruct an identical copy of the Single Integrated Air Picture (SIAP) containing estimated, uniquely labelled composite trajectories of the different aircraft and missiles which are flying in the airspace covered by the different sensors. A composite trajectory contains local measurement information and information received from other platforms.

For civilian air traffic control the ARTAS system has been developed which is operational on, for example Schiphol Airport Amsterdam. The system is described in ' ARTAS: Multisensor tracking in an ATC environment' written by R.A. Hoogendoorn and W.H.L. Neven, National Aerospace Laboratory NLR-TP-97657 issued on 31 December 1997.

The ARTAS system can be considered as an autonomous platform which is responsible for the air picture compilation of an assigned air traffic control sector. It fuses radar measurements produced by assigned sensors. Different ARTAS systems have very little interaction, which means that no Single Integrated Air Picture of the airspace covered by the allocated sensors of different ARTAS systems can be generated. The ARTAS system has problems with reconstructing the trajectories of aircraft which are flying closely together.

Since the end of the Cold War, peace keeping operations have become normal international practice. Furthermore, an enormous proliferation of modern weapons technology has occurred at the same time. The consequence is that in actual and future naval operation areas a large number of stealth targets are expected to be deployed. The result is that the available reaction time for a single air defence platform against a threat has been reduced significantly, resulting in a limited battle space to engage those targets. For a task force the battle space can be effectively enlarged by distribution of all available sensor based information to each member. The result is a distributed platform data fusion system where each platform has a complete overview of the battle space covered by all available sensors.

One possible solution is an approach where the different platforms exchange all non filtered measurements. Each participant creates the same picture of the hostile environment.

Following this principle, the Cooperative Engagement Capability has been developed for military purposes. The Cooperative Engagement Capability (CEC) system is described in 'The Cooperative Engagement Capability', John Hopkins APL Technical Digest, Volume 16, Number 4(1995).

The Cooperative Engagement Capability (CEC) system is a distributed naval air defence system in which every contributing platform distributes all raw sensor measurements from the onboard sensor systems.

A major disadvantage of this solution is that each platform has to process all available data. In terms of CPU-time, the cost can be very high. Very large delays possibly occur with the result that the compiled picture is unacceptably delayed compared to hostile developments in the real world. Furthermore, there is also a risk that the bandwidth of the available communication channels is exceeded which means that the transmission of measurements can be significantly delayed. This could mean that not all platforms in the task force can retrieve the measurements collected at a certain time interval at the same time, resulting in different global compiled pictures produced by each platform which can show large variations in track accuracy, continuity and label consistency.

Therefore, the system has the following weaknesses:
Distribution of all sensor measurements introduces the risk that significant communication delays and/or processing delay can occur which influence the timely availability of the Single Integrated Air Picture (SIAP). This means that the Cooperative Engagement Capability (CEC) system is only limited upwards scalable in the number of platforms/sensors;
For the formation of the different unique trajectories in the Single Integrated Air Picture (SIAP) each platform uses the same method. To work properly to construct and maintain an identical copy of Single Integrated Air Picture (SIAP), each platform must receive timely all available data in the network.

In the Cooperative Engagement Capability (CEC) system where all raw measurements are distributed and processed by each platform, the problems are the following:
1. There is no guarantee that each platform produces and maintains the same copy of the Single Integrated Air Picture (SIAP);
2. In cases of loss of data in the network, it is not possible that the same unique trajectory labels are assigned to trajectories corresponding with the same aircraft or missile;
3. The system is only limited upwards scalable in the number of platforms/sensors.

This invention solves the above-mentioned drawbacks using a distributed single integrated picture method with two separated processing steps: a first processing and a second processing.

The invention is characterised by the features of the claims.

Therefore, an object of this invention is a distributed single integrated picture compilation method adapted for being used on a platform within a platforms network comprising :
- A collecting step of local measurements done by at least one local sensor,
- A receiving step of the network information,
- Two separate processing steps:
   o A first processing step producing reduced information from at least some of the collected local measurements and sending collected local measurements and/or reduced information;
   o A second processing step forms composite trajectories from the collected local measurements and the received network information and labels each trajectory with a unique global trajectory label.

In order to reduce the delays, the distributed single integrated picture compilation method could use adaptive communication. The distributed single integrated picture compilation method comprises a distribution of the network information provided by the first processing only if this network information is needed by other platforms.

Another way to reduce the delays, specially when the communication channels bandwidth or the processing resources are limited, is to reduce the network information which is distributed, for example using preferably reduced information. This further embodiment could be used separately or in combination with the preceding embodiment.

To create and maintain an identical copy of the Single Integrated Picture (e.g. SIAP) , the unique global labelling could comprise, for each received network information or collected local measurement:
- a prediction to the validity time contained in the received network information or collected local measurement,
- a check if this received network information or collected local measurement is assigned to a different trajectory by another platform,
- a label change if the result of the check is negative.

To avoid loss of data and improve the maintenance of an identical copy of the Single Integrated Picture (e.g. SIAP), the distributed single integrated picture compilation method could comprise a track information distribution request if data is detected as not available.

To reduce the computation done by the platform, the formation of trajectories during the second processing could be done by a decomposition method which partitions the multitarget tracking problem in very small independent problems.

A further object of this invention is a distributed single integrated picture platform comprising :
- at least a collocated sensor,
- a receiving unit for receiving network information from other platforms, and
- at least a processing node using the distributed single integrated picture compilation method according to any of claims 1 to 9, divided in two channels:
   o the first channel being connected to the collocated sensor(s), for producing reduced information from at least some of the collected local measurements and for sending collected local measurements and/or reduced information
   o the second channel being connected to the receiving unit and the collocated sensor(s), for forming composite trajectories from the collected local measurements and the received network information and for labelling each trajectory with a unique global trajectory label.

Moreover, another object of this invention is a distributed single integrated picture network comprising at least two of these distributed single integrated picture platforms.

Further features and advantages of the invention will be apparent from the following description of examples of embodiments of the invention with reference to the drawing, which shows details essential to the invention, and from the claims. The individual details may be realised in an embodiment of the invention either separately or jointly in any combination.
- Figure 1, an overview of the platform processing node according to the invention,
- Figure 2, a unique composite track labels block scheme according to the invention,
- Figure 3, a block scheme representing a part of the unique composite track labels method used if missing data is detected, according to the invention.

In the proposed solution according to the invention, each platform has a processing node which can receive measurements or reduced information (e.g. short tracks) from other platforms. The purpose of the reduced information is to compress at least the non collocated sensor measurements in order to reduce the bandwidth occupation and/or the global distributed system computation.

Then, it can occur that a certain platform Pₖ retrieves track information related to a target for which the platform also maintains a platform track.

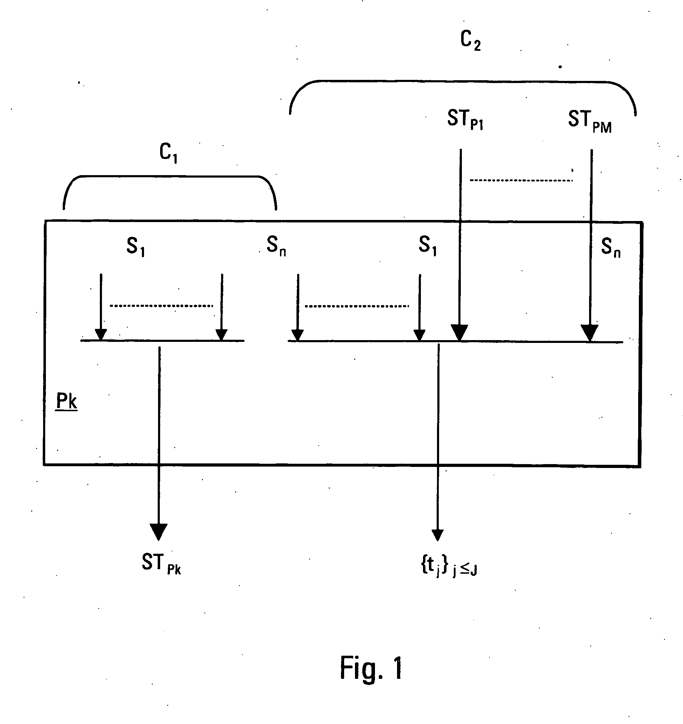

Figure 1 shows an overview of the platform processing node Pₖ. Two processing channels C₁ and C₂ are available:

In the left side of the drawing, a first processing channel C₁ is shown which is responsible for the production of the short tracks ST_{Pk} and/or associated measurements. The measurements S₁... Sₙ collected locally by the platform sensors are processed to produce local trajectories from which short tracks ST_{Pk} are derived for distribution.

The distributed short tracks ST_{Pk} and/or sensor measurements associated with local trajectories comprise information like, for example, time, platform identity, local trajectory label... These distributed short tracks ST_{Pk} and/or sensor measurements associated with local trajectories may also include information where time is the time of creation of the specific local trajectory. Using this time, it is possible to have a processing of delayed or out-of-sequence information.

These distributed short tracks ST_{Pk} and/or sensor measurements associated constitute network information.

In order to reduce communication delays and/or computation delays, reducing or even avoiding also by this way loss of data, the network information ST_{Pk} could be distributed by the first channel C₁ of each platform Pₖ only if needed by other platforms P₁...P_{M}.

At the right side of the drawing, a second processing channel C₂ is shown which produces the Single Integrated Air Picture (SIAP) based on network information ST_{P1}... ST_{PM} received from other platforms P₁ ... P_{M} and locally collected sensor measurements S₁... Sₙ.

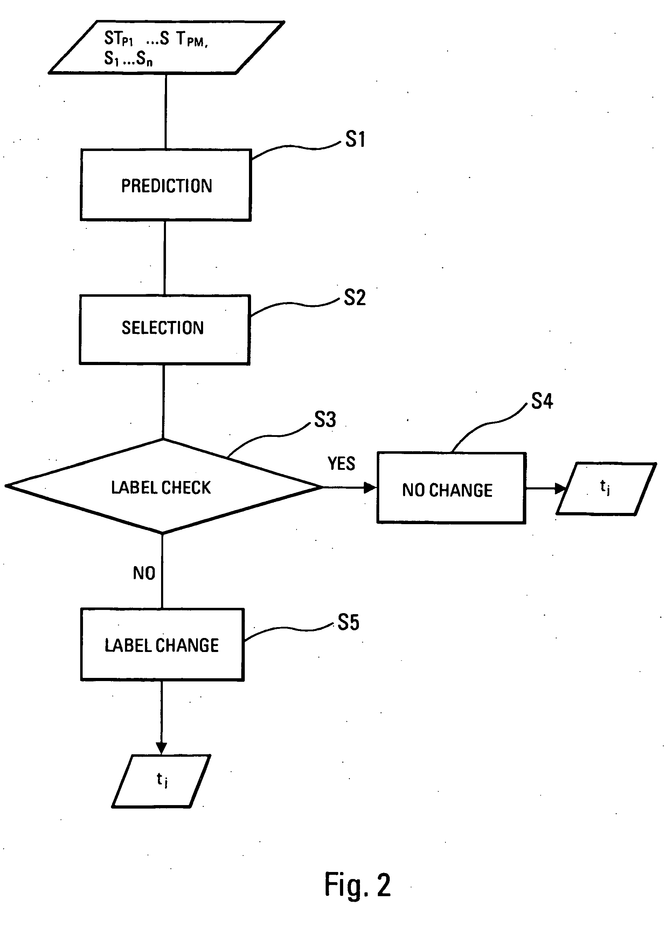

In the second channel C₂, the sensor measurements S₁... Sₙ or network information ST_{P1}... ST_{PM} received from other platforms are processed to form composite trajectories. A composite trajectory tⱼ is based on locally collected sensor measurements and network information ST_{P1}... ST_{PM} received from other platforms (which could comprise short tracks and/or non collocated sensor measurements). A labelling method (as the one shown by Figure 2) could be used to produce unique global trajectory labels and an identical copy of the SIAP is produced and maintained.

To improve the reduction of platform computation load, a decomposition method could be used which partitions the multitarget tracking problem in very small, independent problems. This decomposition method provides considerable improvement with respect with earlier developments.

Each platform has access to all available information. In cases of limited bandwidth of communication channels or limited platform processing resources, the preference is given to the distribution of reduced short track information as network information ST_{Pk} distributed by the first channel C₁ of each platform Pₖ. This reduces the load on the communication channels and platform processors.

The short tracks ST_{Pk} can be calculated using extended Kalman filter technology. The processing is then based on Multiple Hypothesis Tracking as described in 'A new concept for Task Force Data Fusion' written by H.W. de Waard and W. Elgersma published in Signal and Data Processing of Small Targets 2001 proceedings.

A short track is computed in such way that its errors are not cross correlated with the errors of any other data in the system for the same target. Thus, each short track is independent of the other short tracks calculated solving the correlation problems.

Moreover, the short tracks can be calculated in order to be able to be processed as a real sensor measurement to produce a trajectory, so the received short tracks can be directly used to form the composite trajectory.

Figure 2 shows possible functionality to produce the unique composite track labels. First a prediction S1 is made to the validity time contained in the network information (short tracks and/or non collated measurements) of composite trajectories. The next step is to use a geographic window for comparison S2.

Then, the following step is to check S3 if it is possible that other platforms can have assigned the network information to a different composite trajectory. In other words, it checks if there are more than one correlating trajectories. This could mean a deviation in the determination of the Single Integrated Air Picture (SIAP) trajectory labels between the platforms involved.

If this situation cannot occur a change in composite trajectory label S5 is allowed which is carried out in the next step. In another case, there will be no change S4 in composite trajectory label allowed. In any case the produced composite trajectory tⱼ will be used to form the single integrated picture.

In cases that not all data is available to each platform, network information can be distributed on request which is used by the trajectory labelling method of the platform which is missing data. The lack of data can be detected because the distributed data is uniquely labelled by each platform.

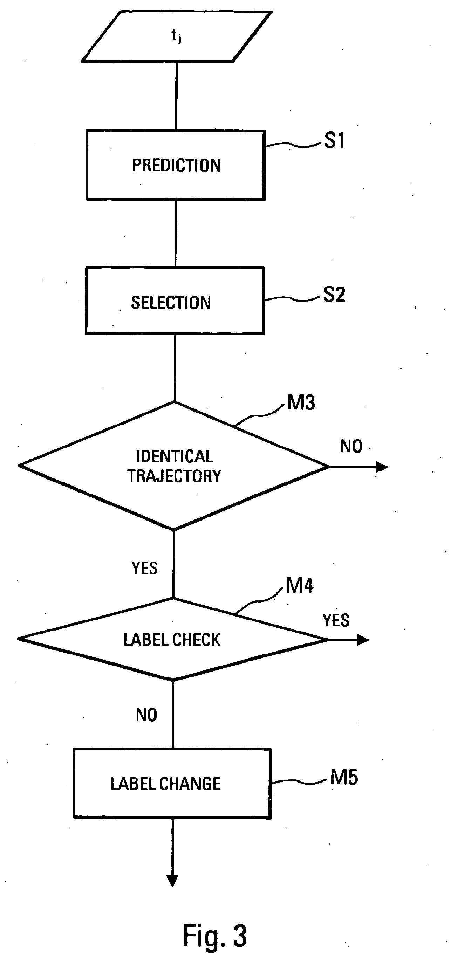

Figure 3 shows the part of the unique composite trajectory labelling method which is used if a platform has detected that it is missing data. On request the platform can receive composite trajectory data tⱼ from a platform which does not miss data to carry out a label check.

After receiving composite trajectory information, first the composite trajectories of the platform are updated to the validity time of the received composite trajectory under consideration. This step is a prediction S 1 of the composite trajectories. The next step is to use a geographic window for comparison S2.

In the next step, a check M3 of the selected trajectories with the received trajectories is carried out. If the received trajectory and the selected trajectory correspond with the same object, a comparison of the trajectory labels M4 is carried out.

If the labels are not equal, the label of the platform trajectory is changed M5 to the trajectory just received. In that case the received trajectory carries the oldest label of the two trajectories.

The invention has the following features (alone or in combination):
1. Fusion of information streams comprising sensor measurements and short tracks;
2. distribution of sensor measurements and short tracks;
3. processing of delayed or out-of-sequence information;
4. distributed network is scalable in the number of platforms/sensors.

The invention guarantees the creation and maintenance of an identical copy of the Single Integrated Air Picture (SIAP) by each platform Pₖ under optimal condition. Furthermore, this solution works also under the following non optimal conditions:
- Limited bandwidth of the available communication channels;
- Limited platform computation resources;
- Occurrence of delayed measurements/reduced information;
- Loss of data in the network;
- Delay in the transmission of data in the network

Another application to the distributed single picture compilation method may be surveillance of any kind of space : not only air space but also over sea or under sea, or land space...

More generally, such distributed single picture compilation method may be used to monitor a space for military or civilian reasons: battle space management, airport space management, cost monitoring for rescue management, or monitoring for space clearing management.

## Claims

1. Method for compilation of a distributed picture into a single integrated picture adapted for being used by a platform within a platforms network comprising :
- A collecting step of local measurements done by at least one local sensor,
- A receiving step of the network information, **characterised in that** it comprises two separate processing steps :
- A first processing step producing reduced information from at least some of the collected local measurements and sending collected local measurements and/or reduced information;
- A second processing step forms composite trajectories from the collected local measurements and the received network information and labels each trajectory with a unique global trajectory label.

2. Method for compilation of a distributed picture into a single integrated picture according to claim 1, **characterised in that** it comprises a distribution of the network information provided by the first processing only if this network information is needed by other platforms.

3. Method for compilation of a distributed picture into a single integrated picture according to any of claims 1 or 2, **characterised in that** the formation of trajectories during the second processing is done by a decomposition method which partitions the multitarget tracking problem in very small independent problems.

4. Method for compilation of a distributed picture into a single integrated picture according to any of claims 1 to 3, **characterised in that**, for each received network information or collected local measurement, the unique global labelling comprises:
- a prediction of the composite trajectories to the validity time contained in the received network information or collected local measurement,
- a label check if this received network information or collected local measurement is assigned to a different trajectory by another platform,
- a label change if the result of the check is negative.

5. Method for compilation of a distributed picture into a single integrated picture according to claims 1 to 4, **characterised in that** it comprises a track information distribution request if data is detected as not available.

6. Method for compilation of a distributed picture into a single integrated picture according to claim 5, **characterised in that**, for each received network information or collected local measurement, the unique global labelling comprises a detection of missing data which induces:
- A request for receiving trajectory information from another platform, and
- A comparison of the labels of the received trajectory and a locally updated trajectory corresponding to the same object using a geographic window,
- A label change to the label of the received trajectory if the result of the comparison is that the label of the received trajectory and the label of the locally updated trajectory are not equal.

7. Method for compilation of a distributed picture into a single integrated picture according to any of claims 1 to 4 **characterised in that** the measurements and the reduced information comprise information where time is the time of creation of a specific local trajectory.

8. Method for compilation of a distributed picture into a single integrated picture according to any of claims 1 to 5 **characterised in that** the network information comprises measurements and/or reduced information sent by at least another platform.

9. Method for compilation of a distributed picture into a single integrated picture according to claim 6, **characterised in that,** if the communication channels bandwidth or the processing resources are limited, the network information comprises only reduced information.

10. Platform compiling a distributed picture into a single integrated picture comprising:
- at least a collocated sensor,
- a receiving unit for receiving network information from other platforms,
- at least a processing node using the method for compilation of a distributed picture into a single integrated picture according to any of claims 1 to 9, divided in two channels:
o the first channel being connected to the collocated sensor(s), for producing reduced information from at least some of the collected local measurements and for sending collected local measurements and/or reduced information,
o the second channel being connected to the receiving unit and the collocated sensor(s), for forming composite trajectories from the collected local measurements and the received network information and for labelling each trajectories with an unique global trajectory label.

11. Network compiling a distributed picture into a single integrated picture comprising at least two of the platforms compiling a distributed picture into a single integrated picture according to the preceding claim.

## Patentansprüche

1. Verfahren zum Zusammenstellen eines verteilten Bildes zu einem integrierten Einzelbild, wobei das Verfahren dafür geeignet ist, von einer Plattform innerhalb eines Plattformen-Netzwerks verwendet zu werden und Folgendes aufweist:
- einen Schritt des Erfassens lokaler Messungen, die von wenigstens einem lokalen Sensor vorgenommen werden;
- einen Schritt des Empfangens der Netzwerkinformationen, **dadurch gekennzeichnet, dass** er zwei separate Verarbeitungsschritte aufweist:
- einen ersten Verarbeitungsschritt, bei dem reduzierte Informationen von wenigstens einigen der erfassten lokalen Messungen erzeugt werden und erfasste lokale Messungen und/oder reduzierte Informationen gesendet werden;
- einen zweiten Verarbeitungsschritt, bei dem zusammengesetzte Trajektorien aus den erfassten lokalen Messungen und den empfangenen Netzwerkinformationen gebildet werden und jede Trajektorie mit einem eindeutigen globalen Trajektoriebezeichner versehen wird.

2. Verfahren zum Zusammenstellen eines verteilten Bildes zu einem integrierten Einzelbild nach Anspruch 1, **dadurch gekennzeichnet, dass** es eine Verteilung der Netzwerkinformationen, die durch die erste Verarbeitung bereitgestellt werden, nur dann aufweist, wenn diese Netzwerkinformationen von anderen Plattformen benötigt werden.

3. Verfahren zum Zusammenstellen eines verteilten Bildes zu einem integrierten Einzelbild nach einem der Ansprüche 1 oder 2, **dadurch gekennzeichnet, dass** die Bildung von Trajektorien während der zweiten Verarbeitung durch ein Zerlegungsverfahren erfolgt, welches das Mehrfachzielverfolgungsproblem in sehr kleine unabhängige Probleme unterteilt.

4. Verfahren zum Zusammenstellen eines verteilten Bildes zu einem integrierten Einzelbild nach einem der Ansprüche 1 bis 3, **dadurch gekennzeichnet, dass** das eindeutige lokale Bezeichnen für jede empfangene Netzwerkinformation oder erfasste lokale Messung Folgendes aufweist:
- eine Vorhersage der zusammengesetzten Trajektorien zu der Gültigkeitszeit, die in den empfangenen Netzwerkinformationen oder in der erfassten lokalen Messung enthalten ist,
- eine Bezeichnerüberprüfung, ob diese empfangenen Netzwerkinformationen oder die erfasste lokale Messung durch eine andere Plattform einer anderen Trajektorie zugewiesen wurde,
- eine Bezeichneränderung, wenn das Ergebnis der Überprüfung negativ ist.

5. Verfahren zum Zusammenstellen eines verteilten Bildes zu einem integrierten Einzelbild nach den Ansprüchen 1 bis 4, **dadurch gekennzeichnet, dass** es eine Verfolgungsinformationsverteilungsanforderung aufweist, wenn Daten als nicht verfügbar detektiert werden.

6. Verfahren zum Zusammenstellen eines verteilten Bildes zu einem integrierten Einzelbild nach Anspruch 5, **dadurch gekennzeichnet, dass** das eindeutige lokale Bezeichnen für jede empfangene Netzwerkinformation oder erfasste lokale Messung ein Detektieren fehlender Daten aufweist, wodurch Folgendes ausgelöst wird:
- eine Anforderung des Erhalts von Trajektorieinformationen von einer anderen Plattform, und
- ein Vergleich der Bezeichner der empfangenen Trajektorie und einer lokal aktualisierten Trajektorie, die demselben Objekt entspricht, unter Verwendung eines geografischen Fensters,
- eine Bezeichneränderung des Bezeichners der empfangenen Trajektorie, wenn das Ergebnis des Vergleichs ist, dass der Bezeichner der empfangenen Trajektorie und der Bezeichner der lokal aktualisierten Trajektorie voneinander verschieden sind.

7. Verfahren zum Zusammenstellen eines verteilten Bildes zu einem integrierten Einzelbild nach einem der Ansprüche 1 bis 4, **dadurch gekennzeichnet, dass** die Messungen und die reduzierten Informationen Informationen aufweisen, wo die Zeit die Zeit der Erzeugung einer bestimmten lokalen Trajektorie ist.

8. Verfahren zum Zusammenstellen eines verteilten integrierten Einzelbildes nach einem der Ansprüche 1 bis 5, **dadurch gekennzeichnet, dass** die Netzwerkinformationen Messungen und/oder reduzierte Informationen aufweisen, die von wenigstens einer anderen Plattform gesendet wurden.

9. Verfahren zum Zusammenstellen eines verteilten Bildes zu einem integrierten Einzelbild nach Anspruch 6, **dadurch gekennzeichnet, dass**, wenn die Bandbreite der Kommunikationskanäle oder die Verarbeitungsressourcen begrenzt sind, die Netzwerkinformationen nur reduzierte Informationen aufweisen.

10. Plattform zum Zusammenstellen eines verteilten Bildes zu einem integrierten Einzelbild, wobei die Plattform Folgendes aufweist:
- wenigstens einen kollokierten Sensor,
- eine Empfangseinheit zum Empfangen von Netzwerkinformationen von anderen Plattformen, und
- wenigstens einen Verarbeitungsknoten, der das Verfahren zum Zusammenstellen eines verteilten Bildes zu einem integrierten Einzelbild nach einem der Ansprüche 1 bis 9 anwendet, und der in zwei Kanäle unterteilt ist:
- wobei der erste Kanal mit dem einen oder den mehreren kollokierten Sensoren verbunden ist, zum Erzeugen reduzierter Informationen aus wenigstens einigen der erfassten lokalen Messungen und zum Senden erfasster lokaler Messungen und/oder reduzierter Informationen,
- wobei der zweite Kanal mit der Empfangseinheit und dem einen oder den mehreren kollokierten Sensoren verbunden ist, zum Bilden zusammengesetzter Trajektorien aus den erfassten lokalen Messungen und den empfangenen Netzwerkinformationen und zum Bezeichnen jeder Trajektorie mit einem eindeutigen globalen Trajektoriebezeichner.

11. Netzwerk zum Zusammenstellen eines verteilten Bildes zu einem integrierten Einzelbild, wobei das Netzwerk wenigstens zwei der Plattformen zum Zusammenstellen eines verteilten Bildes zu einem integrierten Einzelbild nach dem vorangegangenen Anspruch aufweist.

## Revendications

1. Méthode de compilation d'une situation distribuée en une situation intégrée unique, adaptée pour être utilisée par une plate-forme au sein d'un réseau de plates-formes, comportant :
- une étape de collecte de mesures locales prises par au moins un capteur local,
- une étape de réception des informations du réseau, **caractérisée en ce qu'**elle comporte deux étapes de traitement séparées :
- une première étape de traitement produisant des informations réduites à partir d'au moins certaines des mesures locales collectées et envoyant les mesures locales collectées et/ou les informations réduites ;
- une deuxième étape de traitement formant des trajectoires composites à partir des mesures locales collectées et des informations reçues du réseau et étiquetant chaque trajectoire avec une étiquette unique de trajectoire commune.

2. Méthode de compilation d'une situation distribuée en une situation intégrée unique selon la revendication 1, **caractérisée en ce qu'**elle comporte une distribution des informations de réseau fournies par la première étape de traitement uniquement si ces informations de réseau sont nécessaires à d'autres plates-formes.

3. Méthode de compilation d'une situation distribuée en une situation intégrée unique selon l'une quelconque des revendications 1 et 2, **caractérisée en ce que** la formation des trajectoires durant la deuxième étape de traitement est effectuée par une méthode de décomposition qui subdivise le problème de poursuite multi-cibles en très petits problèmes indépendants.

4. Méthode de compilation d'une situation distribuée en une situation intégrée unique selon l'une quelconque des revendications 1 à 3, **caractérisée en ce que**, pour chaque information reçue du réseau ou mesure locale collectée, l'étiquetage commun unique comporte :
- une prédiction des trajectoires composites jusqu'à la durée de validité contenue dans l'information reçue du réseau ou la mesure locale collectée,
- une vérification d'étiquette si cette information reçue du réseau ou cette mesure locale collectée est attribuée à une trajectoire différente par une autre plate-forme,
- un changement d'étiquette si le résultat de la vérification est négatif.

5. Méthode de compilation d'une situation distribuée en une situation intégrée unique selon les revendications 1 à 4, **caractérisée en ce qu'**elle comporte une demande de distribution des informations de poursuite si des données sont détectées comme non disponibles.

6. Méthode de compilation d'une situation distribuée en une situation intégrée unique selon la revendication 5, **caractérisée en ce que**, pour chaque information reçue du réseau ou mesure locale collectée, l'étiquetage commun unique comporte une détection de données manquantes qui induit :
- une demande en vue de recevoir des informations de trajectoire depuis une autre plate-forme,
- une comparaison des étiquettes de la trajectoire reçue et d'une trajectoire actualisée localement correspondant au même objet, à l'aide d'une fenêtre géographique, et
- un changement d'étiquette de la trajectoire reçue si le résultat de la comparaison est que l'étiquette de la trajectoire reçue et l'étiquette de la trajectoire actualisée localement ne sont pas égales.

7. Méthode de compilation d'une situation distribuée en une situation intégrée unique selon l'une quelconque des revendications 1 à 4 **caractérisée en ce que** les mesures et les informations réduites comportent des informations datées de l'instant de création d'une trajectoire locale particulière.

8. Méthode de compilation d'une situation distribuée en une situation intégrée unique selon l'une quelconque des revendications 1 à 5 **caractérisée en ce que** les informations de réseau comportent des mesures et/ou des informations réduites envoyées par au moins une autre plate-forme.

9. Méthode de compilation d'une situation distribuée en une situation intégrée unique selon la revendication 6, **caractérisée en ce que**, si la bande passante des canaux de communication ou les ressources de traitement sont limitées, les informations de réseau ne comportent que des informations réduites.

10. Plate-forme compilant une situation distribuée en une situation intégrée unique comportant :
- au moins un capteur colocalisé,
- une unité réceptrice pour recevoir des informations de réseau provenant d'autres plates-formes,
- au moins un noeud de traitement utilisant la méthode de compilation d'une situation distribuée en une situation intégrée unique selon l'une quelconque des revendications 1 à 9, divisé en deux canaux :
- le premier canal étant relié au(x) capteur(s) colocalisé(s), en vue de produire des informations réduites à partir d'au moins certaines des mesures locales collectées et d'envoyer les mesures locales collectées et/ou les informations réduites ;
- le deuxième canal étant relié à l'unité réceptrice et au (x) capteur (s) colocalisé (s), en vue de former des trajectoires composites à partir des mesures locales collectées et des informations reçues du réseau et d'étiqueter chaque trajectoire avec une étiquette unique de trajectoire commune.

11. Réseau compilant une situation distribuée en une situation intégrée unique comportant au moins deux des plates-formes compilant une situation distribuée en une situation intégrée unique selon la revendication précédente.
